(19) Europäisches Patentamt
European Patent Office
Office européen des brevets

(11) **EP 4 353 681 A1**

(12) **EUROPEAN PATENT APPLICATION**
published in accordance with Art. 153(4) EPC

(43) Date of publication:
**17.04.2024 Bulletin 2024/16**

(21) Application number: **22841909.9**

(22) Date of filing: **24.06.2022**

(51) International Patent Classification (IPC):
*C01B 33/18* (2006.01)       *C08L 101/00* (2006.01)
*C08K 3/22* (2006.01)       *C08K 3/36* (2006.01)
*C01F 7/02* (2022.01)

(52) Cooperative Patent Classification (CPC):
**C01B 33/18; C01F 7/02; C08K 3/22; C08K 3/36; C08L 101/00**

(86) International application number:
**PCT/JP2022/025298**

(87) International publication number:
**WO 2023/286565 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021 JP 2021116375**

(71) Applicant: **Denka Company Limited Tokyo 103-8338 (JP)**

(72) Inventors:
• **TSUNEYOSHI, Toshihiko**
  **Tokyo 103-8338 (JP)**
• **FUKAZAWA, Motoharu**
  **Tokyo 103-8338 (JP)**
• **OKABE, Takuto**
  **Tokyo 103-8338 (JP)**

(74) Representative: **Vossius & Partner Patentanwälte Rechtsanwälte mbB Siebertstrasse 3 81675 München (DE)**

(54) **OXIDE COMPOSITE PARTICLES, METHOD FOR PRODUCING SAME, AND RESIN COMPOSITION**

(57)    Provided are oxide composite particles closer to a sphere that are mixed with a resin to obtain a resin composition having low dielectric constant and low dielectric loss tangent. The oxide composite particles containing silica and an oxide of aluminum (a single oxide or a composite oxide, or both), in which the oxide composite particles contain 10 to 90% by mass of an $\alpha$-cristobalite crystal phase, 50% by mass or less of an $\alpha$-alumina crystal phase, and more than 10% by mass of a mullite crystal phase, and an elemental ratio of aluminum to silicon (aluminum/silicon) as determined by X-ray photoelectron spectroscopy is 0.1 or more.

Fig. 1

**Description**

TECHNICAL FIELD

The present invention relates to oxide composite particles, a method for producing the same, and a resin composition.

BACKGROUND ART

With the recent increase in the volume of information and communications in the field of communication, use of high-frequency bands has been spreading in electronic devices, communication devices, and the like. Therefore, materials for use in high-frequency devices are required to have low dielectric constant and low dielectric loss tangent. Further, related electronic materials and members have become increasingly smaller and highly integrated, and therefore materials for use in high-frequency devices are required to have higher heat dissipation properties.

Silica ($SiO_2$) as a high-frequency ceramic material has a low dielectric constant (3.7) and a quality factor index Qf (which is a value obtained by multiplying the reciprocal of dielectric loss tangent and measurement frequency) of about 120,000, and is therefore a promising material for a filler having low dielectric constant and low dielectric loss tangent. The shape of the filler is preferably closer to a sphere to facilitate blending with a resin and to improve moldability by lowering the viscosity. Spherical silica can easily be synthesized (for example, PTL 1) and has already been used for various purposes. Therefore, spherical silica is expected to widely be used also in high-frequency dielectric devices and the like.

However, such spherical silica is generally amorphous and has a thermal conductivity as low as about 1 W/m-K. Therefore, a resin composition containing spherical silica as a filler may be insufficient in heat dissipation properties. In order to improve thermal conductivity, amorphous spherical silica may be crystallized into quartz, cristobalite or the like. For example, PTLs 2 and 3 propose that amorphous spherical silica is crystallized into quartz or cristobalite by heat treatment. On the other hand, PTL 4 discloses a silica powder having an aluminum oxide-based ceramic coating film formed using aerosil.

CITATION LIST

PATENT LITERATURE

PTL 1: Japanese Patent Laid-Open No. 58-138740
PTL 2: Japanese Patent No. 6207753
PTL 3: International Publication No. WO 2018/186308
PTL 4: Japanese Patent Laid-Open No. 10-251042

SUMMARY OF INVENTION

TECHNICAL PROBLEM

Oxide composite particles containing crystalline silica such as quartz and cristobalite are difficult to maintain a spherical shape in their production, and it is desirable to develop oxide composite particles that are closer to a sphere and have low dielectric constant and low dielectric loss tangent.

It is an object of the present invention to provide oxide composite particles closer to a sphere that are mixed with a resin to obtain a resin composition having low dielectric constant and low dielectric loss tangent, a method for producing the same, and the resin composition.

SOLUTION TO PROBLEM

The present invention includes the following embodiments.

[1] Oxide composite particles containing silica and an oxide of aluminum (a single oxide or a composite oxide, or both), wherein

the oxide composite particles contain 10 to 90% by mass of an α-cristobalite crystal phase, 50% by mass or

less of an $\alpha$-alumina crystal phase, and more than 10% by mass of a mullite crystal phase, and an elemental ratio of aluminum to silicon (aluminum/silicon) as determined by X-ray photoelectron spectroscopy is 0.1 or more.

[2] The oxide composite particles according to [1], wherein a content of the aluminum contained in the oxide composite particles is 5 to 60% by mass in terms of a single oxide of aluminum ($Al_2O_3$).

[3] The oxide composite particles according to [1] or [2], wherein an average particle diameter of the oxide composite particles is 0.5 to 70 $\mu$m.

[4] The oxide composite particles according to any one of [1] to [3], wherein an average circularity of the oxide composite particles is 0.85 or more.

[5] The oxide composite particles according to any one of [1] to [4], wherein the oxide composite particles contain 0.1 to 50% by mass of the $\alpha$-alumina crystal phase.

[6] A method for producing the oxide composite particles according to any one of [1] to [5], the method including the steps of:

mixing silica particles having an average particle diameter of 0.5 to 10 $\mu$m and alumina particles to obtain a mixture; and
heating the mixture at 1300 to 1700°C for 2 to 8 hours.

[7] The method for producing the oxide composite particles according to [6], wherein the step to obtain a mixture is a step of spraying an alumina slurry containing the alumina particles into an air stream in which the silica particles are floating using a tumbling fluidized bed machine to form particles having a core-shell structure such that the alumina particles adhere to a surface of the silica particles.

[8] A resin composition containing the oxide composite particles according to any one of [1] to [5] and a resin.

[9] The resin composition according to [8], wherein a content of the oxide composite particles in the resin composition is 20 to 80% by mass.

[10] The resin composition according to [8] or [9], which is a resin composition for high-frequency substrates.

ADVANTAGEOUS EFFECTS OF INVENTION

The present invention can provide oxide composite particles closer to a sphere that are mixed with a resin to obtain a resin composition having low dielectric constant and low dielectric loss tangent, a method for producing the same, and the resin composition.

BRIEF DESCRIPTION OF DRAWING

Fig. 1 is a schematic diagram showing an example of a tumbling fluidized bed machine to be used in the method according to the present embodiment.
Fig. 2 is a diagram showing the X-ray diffraction pattern of oxide composite particles of Example 1.

DESCRIPTION OF EMBODIMENTS

Hereinbelow, an embodiment of the present invention will be described. However, the present invention is not limited to the following embodiment.

[Oxide composite particles]

Oxide composite particles according to the present embodiment contain silica and an oxide of aluminum. In the present embodiment, the "an oxide of aluminum" refer to a single oxide of aluminum, a composite oxide of aluminum, or both. Here, the oxide composite particles contain 10 to 90% by mass of an $\alpha$-cristobalite crystal phase, 50% by mass or less of an $\alpha$-alumina crystal phase, and more than 10% by mass of a mullite crystal phase. Further, the elemental ratio of aluminum to silicon (aluminum/silicon) as determined by X-ray photoelectron spectroscopy (hereinafter also referred to as XPS) is 0.1 or more.

The oxide composite particles according to the present embodiment contain an $\alpha$-cristobalite crystal phase, an $\alpha$-alumina crystal phase, and a mullite crystal phase so that their contents are respectively within the above-described ranges, which makes it possible to achieve high sphericity and obtain a resin composition having low dielectric constant and low dielectric loss tangent. Particularly, the oxide composite particles according to the present embodiment have an aluminum/silicon elemental ratio of 0.1 or more as determined by XPS, and therefore have a structure such that the oxide of aluminum is present to some extent at the surface of the oxide composite particles and at least part of the surface of the oxide composite particles is coated with a layer composed of the oxide of aluminum. With such a structure, high sphericity can be developed in the present embodiment because the layer composed of the oxide of aluminum, which has a relatively high melting point, prevents fusion between oxide composite particles. Further, the $\alpha$-cristobalite crystal phase contained in the oxide composite particles exhibits low dielectric constant and low dielectric loss tangent, and therefore high sphericity, low dielectric constant, and low dielectric loss tangent can be achieved as a whole.

The oxide composite particles contain 10 to 90% by mass of an $\alpha$-cristobalite crystal phase with respect to the total mass of the oxide composite particles (i.e., the total mass of the oxide composite particles is taken as 100% by mass). If the content of the $\alpha$-cristobalite crystal phase is less than 10% by mass, it is impossible to ensure the dielectric characteristics required for the resin composition for high-frequency substrates. In addition, if the content exceeds 90% by mass, fusion between the oxide composite particles proceeds due to a lack of aluminum oxide components forming the layer composed of the oxide of aluminum, and therefore the high circularity cannot be maintained. The content may be, for example, 20 to 85% by mass, 30 to 85% by mass, 50 to 85% by mass, or 60 to 85% by mass. The identification and quantification of the crystal phase are performed by powder X-ray diffraction/Rietveld method. The assignment of crystals can be performed by, for example, an X-ray database, etc. Specifically, analysis can be performed by the method described later.

The oxide composite particles contain to 50% by mass or less of an $\alpha$-alumina crystal phase with respect to the total mass of the oxide composite particles (i.e., the total mass of the oxide composite particles is taken as 100% by mass). If the content exceeds 50% by mass, an increase in dielectric characteristics, especially dielectric constant, occurs. The content may be, for example, 0.1 to 50% by mass, 0.3 to 30% by mass, 0.3 to 20% by mass, 0.5 to 10% by mass, 0.5 to 5% by mass, or 0.5 to 3% by mass. The identification and quantification of the crystal phase and the assignment of crystals can be performed in the same manner as in the case of the $\alpha$-cristobalite crystal phase. Specifically, analysis can be performed by the method described later.

The oxide composite particles contain more than 10% by mass of a mullite crystal phase with respect to the total mass of the oxide composite particles (i.e., the total mass of the oxide composite particles is taken as 100% by mass). If the content of the mullite crystal phase is 10% by mass or less, fusion between the oxide composite particles proceeds due to a lack of aluminum oxide components forming the layer composed of the oxide of aluminum, and therefore the high circularity cannot be maintained. The content of the mullite crystal phase may be 11 to 80% by mass, 11 to 60% by mass, 11 to 40% by mass, 11 to 30% by mass, or 11 to 25% by mass. The identification and quantification of the crystal phase and the assignment of crystals can be performed in the same manner as in the case of the $\alpha$-cristobalite crystal phase. Specifically, analysis can be performed by the method described later.

The oxide composite particles may contain 50% by mass or less of amorphous silica or 30% by mass of amorphous silica with respect to the total mass of the oxide composite particles (i.e., the total mass of the oxide composite particles is taken as 100% by mass). Particularly, when the content of amorphous silica is 10% by mass or less, the value of dielectric loss tangent can be kept low. It should be noted that the oxide composite particles according to the present embodiment do not always have to contain amorphous silica. The identification and quantification of amorphous silica can be performed in the same manner as in the case of the $\alpha$-cristobalite crystal phase. Specifically, analysis can be performed by the method described later.

The oxide composite particles may further contain another crystal phase or another amorphous phase other than the above-described $\alpha$-cristobalite crystal phase, $\alpha$-alumina crystal phase, mullite crystal phase, and amorphous silica. Examples of the another crystal phase include $\gamma$-alumina, $\theta$-alumina, and quartz. Examples of the another amorphous phase include amorphous alumina. The content of the another crystal phase may be, for example, 0 to 8% by mass or 0 to 4% by mass with respect to the total mass of the oxide composite particles (i.e., the total mass of the oxide composite particles is taken as 100% by mass). The content of the another amorphous phase may be, for example, 0 to 8% by mass or 0 to 4% by mass with respect to the total mass of the oxide composite particles (i.e., the total mass of the oxide composite particles is taken as 100% by mass). It should be noted that the oxide composite particles do not always have to contain the another crystal phase or the another amorphous phase.

The content of aluminum in the oxide composite particles (when the total mass of the oxide composite particles is taken as 100% by mass) is preferably 5 to 60% by mass in terms of a single oxide of aluminum ($Al_2O_3$). When the content is 5% by mass or more, a resulting resin composition can achieve heat dissipation performance at or above a certain level. When the content is 60% by mass or less, the oxide composite particles have low dielectric constant and low dielectric loss tangent, which makes it possible to use the oxide composite particles for high-frequency devices. The content may be, for example, 5 to 40% by mass or 5 to 30% by mass. It should be noted that "aluminum" herein refers to all aluminum elemental components presents as any compound, including a single oxide of aluminum represented by $\alpha$-alumina and a composite oxide of aluminum represented by mullite in the oxide composite particles. The content of aluminum contained in the oxide composite particles in terms of a single oxide of aluminum ($Al_2O_3$) can be measured

by ICP (Inductively Coupled Plasma) analysis. Specifically, analysis can be performed by the method described later.

The content of silica in the oxide composite particles (when the total mass of the oxide composite particles is taken as 100% by mass) is preferably 40 to 95% by mass. When the content is 40% by mass or more, the oxide composite particles have low dielectric constant and low dielectric loss tangent, which makes it possible to use the oxide composite particles for high-frequency devices. It should be noted that the content of silica can also be measured by ICP analysis in the same manner as the oxide content of aluminum. Specifically, analysis can be performed in the same manner as the method of measuring aluminum oxide components, which is described later.

The oxide composite particles may further contain an additional component other than silica and an oxide of aluminum, and may consist of silica and an oxide of aluminum.

The oxide composite particles have an elemental ratio of aluminum/silicon of 0.1 or more as determined by XPS (X-ray Photoelectron Spectroscopy). XPS can obtain information of elements present several nanometers below the surface of a measurement sample, and therefore the oxide composite particles according to the present embodiment whose elemental ratio described above is 0.1 or more have a structure such that the oxide of aluminum is present to some extent at the surface of the oxide composite particles and at least part of the surface of the oxide composite particles is coated with a layer composed of the oxide of aluminum. The elemental ratio is preferably 0.3 or more, more preferably 0.5 or more, and even more preferably 0.8 or more. The surface of the oxide composite particles is preferably coated with a layer composed of the oxide of aluminum as much as possible, and therefore the elemental ratio is preferably higher, but the range of the elemental ratio can be, for example, 10 or less. It should be noted that the elemental ratio of aluminum/silicon determined by XPS can be measured by the method described later.

The average particle diameter of the oxide composite particles is preferably 0.5 to 70 $\mu$m. When the average particle diameter is 0.5 $\mu$m or more, a resulting resin composition can achieve a certain level of heat dissipation characteristics. When the average particle diameter is 70 $\mu$m or less, the oxide composite particles can be used as an exoergic filler for high-frequency devices to fill a gap between materials. The average particle diameter may be, for example, 1 to 50 $\mu$m, 3 to 45 $\mu$m, or 5 to 35 $\mu$m. It should be noted that the average particle diameter is measured using a laser diffraction particle size distribution analyzer. Specifically, the average particle diameter can be measured by the method described later.

The average circularity of the oxide composite particles is preferably 0.85 or more. When the average circularity is 0.85 or more, a resulting resin composition can achieve low viscosity. The average circularity is more preferably 0.87 or more, even more preferably 0.88 or more, and particularly preferably 0.90 or more. The upper limit of the average circularity is not limited. However, the average circularity is preferably as high as possible and may be 1. It should be noted that the average circularity is a value indicating how close the oxide composite particles are to a sphere. The average circularity is measured by the following method. The projected area (S) and projected perimeter (L) of a single oxide composite particle are determined from a photograph taken by an electron microscope and are plugged into the following formula (1) to calculate circularity. The average of circularities of all the oxide composite particles included in a circle having a certain projected area (in an area including 100 or more oxide composite particles) is calculated and defined as an average circularity. Specifically, the average circularity can be measured by the method described later.

$$\text{Circularity} = 4\pi S / L^2 \quad (1)$$

The oxide composite particles according to the present embodiment can have high sphericity, and when mixed with a resin, a resulting resin composition can have high thermal conductivity, low dielectric constant, and low dielectric loss tangent. Therefore, the oxide composite particles according to the present embodiment are useful as a filler to be contained in a resin composition required to have such physical properties (e.g., a resin composition for high-frequency substrates, etc.).

[Method for producing oxide composite particles]

A method for producing oxide composite particles according to the present embodiment includes the steps of mixing silica particles having an average particle diameter of 0.5 to 10 $\mu$m and alumina particles to obtain a mixture (hereinafter also referred to as mixture production step); and heating the mixture at 1300 to 1700°C for 2 to 8 hours (hereinafter also referred to as heating step). The method according to the present embodiment can easily and efficiently produce the oxide composite particles according to the present embodiment.

(Mixture production step)

In this step, silica particles having an average particle diameter of 0.5 to 10 $\mu$m and alumina particles are mixed to obtain a mixture. The silica particles used as a raw material are not limited in crystal system and may be amorphous, quartz, cristobalite, or the like, and a method for producing the silica particles is not limited, either. However, $SiO_2$ containing 90% by mass or more of an amorphous phase is preferably used, and $SiO_2$ formed from an amorphous phase is more preferably used. $SiO_2$ containing 90% by mass or more of an amorphous phase may be $SiO_2$ produced by, for example, a flame fusion method, a deflagration method, a gas phase method, or a wet method.

The average particle diameter of the silica particles as a raw material can be, for example, 0.5 to 10 $\mu$m from the viewpoint of usability as base particles in a mixing process using a tumbling fluidized bed machine described later. It should be noted that the average particle diameter is measured in the same manner as the average particle diameter of the oxide composite particles. In addition, spherical silica particles are preferably used as the raw material from the viewpoint of increasing the average circularity of the oxide composite particles. The average circularity of the silica particles is preferably 0.9 or more, and more preferably 0.95 or more. It should be noted that the average circularity is measured in the same manner as the average circularity of the oxide composite particles.

Alumina of the alumina particles used as a raw material is not limited, and examples thereof include $\gamma$-$Al_2O_3$, $\theta$-$Al_2O_3$, $\alpha$-$Al_2O_3$, and amorphous alumina. These may be used singly or in combination of two or more. As will be described later, the alumina particles may be in the form of an alumina slurry (alumina sol), and the alumina of the alumina particles may be alumina hydrate.

Particularly, this step is preferably a step of spraying an alumina slurry containing the alumina particles into an air stream in which the silica particles are floating using a tumbling fluidized bed machine to form particles having a core-shell structure such that the alumina particles adhere to a surface of the silica particles. The oxide composite particles according to the present invention can be more efficiently produced by mixing using a tumbling fluidized bed machine.

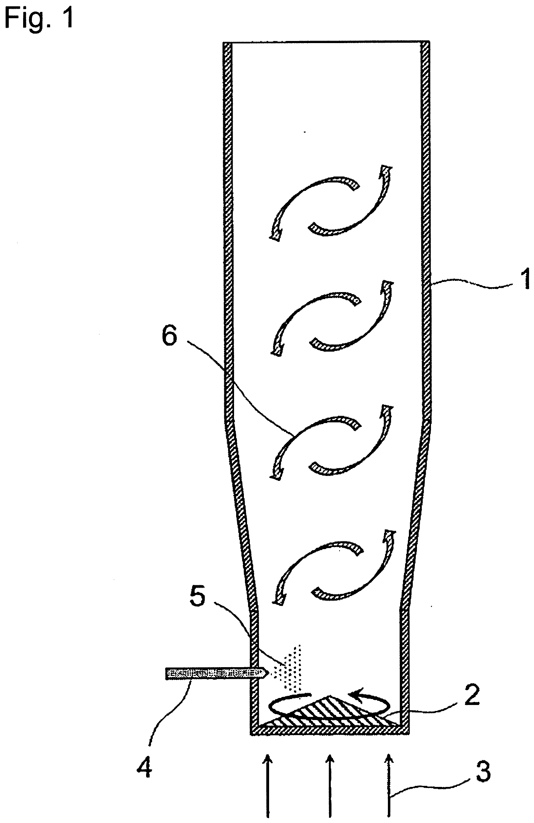

An example of the tumbling fluidized bed machine to be used in this step is shown in Fig. 1. The tumbling fluidized bed machine 1 shown in Fig. 1 is equipped with a rotatable blade rotor 2 at the bottom and a spray nozzle 4 capable of spraying an alumina slurry (alumina sol) 5 on the side surface. Silica particles (not shown) are introduced into the tumbling fluidized bed machine 1, and when gas 3 is supplied from the bottom, the rotation of the blade rotor 2 causes the supplied gas 3 to form a swirling flow 6 together with the silica particles and the sprayed alumina slurry in the form of fine particles. As a result, it is possible to efficiently form particles having a core-shell structure such that the alumina particles adhere to the surface of the silica particles.

The content of alumina particles contained in the alumina slurry is not limited and may be, for example, 1 to 50% by mass. The solvent of the alumina slurry may be water, ethanol, or the like. The mass ratio of alumina particles to silica particles (alumina particles/silica particles) to be mixed in the tumbling fluidized bed machine can be appropriately selected to be a desired content of each crystal phase, and can be, for example, 0.01 to 1.0. The temperature of the supplied gas (airflow) can be 10 to 100°C.

(Heating step)

In this step, the mixture obtained in the mixture production step is heated at 1300 to 1700°C for 2 to 8 hours. A heating device for heating the mixture is not limited as long as high-temperature heating can be performed, and examples thereof include an electric furnace and a pusher furnace. A heating atmosphere is not limited, and examples thereof include air, $N_2$, Ar, and vacuum.

A heating temperature is preferably 1300 to 1700°C, more preferably 1400 to 1650°C, and even more preferably 1500 to 1600°C. When the heating temperature is 1300°C or higher, the content of cristobalite increases, and therefore thermal conductivity required for an exoergic filler and low dielectric constant and low dielectric loss tangent required for a filler for high-frequency substrates can be achieved. When the heating temperature is 1700°C or lower, it is possible to prevent a reduction in the circularity of oxide composite particles due to fusion between particles caused by heating. A heating time is preferably 2 to 8 hours, more preferably 2 to 6 hours, and even more preferably 2 to 4 hours. When the heating time is 2 hours or more, the content of cristobalite increases, and therefore thermal conductivity and dielectric characteristics can be achieved. When the heating time is 8 hours or less, it is possible to prevent a reduction in the circularity of oxide composite particles due to fusion between particles caused by heating.

The oxide composite particles obtained after heating may be in the form of agglomerates obtained by agglomeration of the particles. The agglomerates may directly be used as oxide composite particles. However, if necessary, the agglomerates may be disintegrated before used as oxide composite particles. A method for disintegrating the agglomerates is not limited and may be, for example, a method using an agate mortar, a ball mill, a vibration mill, a jet mill, or a wet jet mill. The disintegration may be performed either by a dry method or a wet method in which the agglomerates are mixed with a liquid such as water or an alcohol. In the case of wet disintegration, oxide composite particles are obtained by performing drying after disintegration. A method for drying is not limited, and examples thereof include heat drying, vacuum drying, freeze drying, and supercritical carbon dioxide drying.

(Another step)

The method for producing oxide composite particles according to the present embodiment may further include, in addition to the mixture production step and the heating step, another step such as a classification step in which the oxide composite particles are classified to achieve a desired average particle diameter or a washing step to reduce impurities.

[Resin composition]

A resin composition according to the present embodiment contains the oxide composite particles according to the present embodiment and a resin. The resin composition according to the present embodiment contains the oxide composite particles according to the present embodiment and therefore can have low dielectric constant and low dielectric loss tangent. The resin composition according to the present embodiment contains the oxide composite particles according to the present embodiment having high sphericity and therefore has low viscosity, high fluidity, and excellent moldability.

The resin is not limited, and examples thereof include polyethylene, polypropylene, epoxy resins, silicone resins, phenol resins, melamine resins, urea resins, unsaturated polyesters, fluorine resins, polyamides such as polyimides, polyamideimides, and polyetherimides, polyesters such as polybutylene terephthalate and polyethylene terephthalate, polyphenylene sulfides, wholly aromatic polyesters, polysulfones, liquid crystal polymers, polyether sulfones, polycarbonates, modified maleimide resins, ABS resins, AAS (acrylonitrile-acrylic rubber-styrene) resins, and AES (acrylonitrile-ethylene/propylene/diene rubber-styrene) resins. These resins may be used singly or in combination of two or more.

The content of the oxide composite particles in the resin composition is appropriately selected depending on desired physical properties such as dielectric constant, and dielectric loss tangent, but is preferably 20 to 80% by mass. This content corresponds to 11 to 67% by volume when the density of the oxide composite particles is 2.4 and the density of the resin is 1.2, and corresponds to 9 to 61% by volume when the density of the oxide composite particles is 3.1 and the density of the resin is 1.2.

The resin composition according to the present embodiment may contain an additional component other than the oxide composite particles according to the present embodiment and the resin. Examples of the additional component include a flame retardant and glass cloth. Further, particles different from the oxide composite particles according to the present embodiment in composition, specific surface area, average particle diameter, and others may further be mixed, which makes it easier to adjust the thermal conductivity, dielectric constant, dielectric loss tangent, filling factor, and others of the resin composition.

The dielectric constant of the resin composition according to the present embodiment is preferably 6.0 or less, more preferably 5.5 or less, and even more preferably 5.0 or less. The dielectric loss tangent of the resin composition according to the present embodiment is preferably $5.0 \times 10^{-4}$ or less, and more preferably $4.5 \times 10^{-4}$ or less. It should be noted that the dielectric constant and dielectric loss tangent of the resin composition are measured by the methods described later.

The resin composition according to the present embodiment has low dielectric constant, low dielectric loss tangent, and good moldability, and is therefore particularly useful as a resin composition for high-frequency substrates. Specific examples of the high-frequency substrates include fluorine substrates, PPE substrates, and ceramic substrates.

EXAMPLES

Hereinbelow, an embodiment of the present invention will more specifically be described with reference to examples, but the present invention is not limited to these examples.

[Example 1]

(Mixture production step)

A mixture containing particles having a core-shell structure such that the alumina particles adhere to the surface of the silica particles was produced using a tumbling fluidized bed machine. Specifically, an alumina slurry (trade name: PG008, manufactured by CABOT Corporation, solid content: 40% by mass) was diluted with pure water to prepare an alumina slurry with a solid content of 20% by mass. The alumina slurry was sprayed at a rate of 5.0 g/min into a tumbling fluidized bed machine (trade name: FD-MP-01, manufactured by Powrex Corporation) into which 500 g of silica particles (trade name: FB5D, manufactured by Denka Company Limited, average particle diameter: 4.8 μm) were introduced, and the two were mixed by a swirling flow to obtain a mixture. The amount of alumina particles added was 15% by mass.

(Heating step)

Then, 10 g of the mixture obtained in the mixture production step was placed in an alumina crucible and heated in an electric furnace by increasing the temperature from a room temperature at 10°C/min. At this time, the heating temperature was 1500°C and the heating time was 4 hours. After heated, the mixture was naturally cooled. After cooled, the sample was disintegrated in an agate mortar and sieved through a screen having an opening of 106 μm to obtain oxide composite particles. The oxide composite particles were evaluated by the methods described later.

[Examples 2 to 7 and Comparative Examples 1 to 3]

Oxide composite particles were prepared and evaluated in the same manner as in Example 1 except that the types and amounts of the raw materials added, the heating time, and the heating temperature were changed as shown in Table 1 or Table 2. It should be noted that in Examples 5, 6, and 7, air-classified silica particles having average particle diameters of 0.5 μm, 3.1 μm, and 8.2 μm, respectively, were used.

The characteristics of the oxide composite particles prepared in Examples and Comparative Examples were evaluated by the methods described below. The evaluation results are shown in Table 1 and Table 2.

[Identification of each crystal phase and measurement of content of each crystal phase]

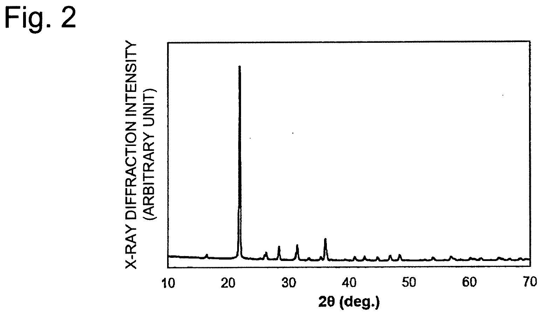

Identification of each crystal phase contained in the oxide composite particles and measurement of the content of each crystal phase were performed by powder X-ray diffraction measurement/Rietveld method. As a measurement device, a sample horizontal-type multipurpose X-ray diffractometer (manufactured by Rigaku Corporation, trade name: RINT-Ultima IV) was used. Measurement was performed under the following conditions: X-ray source: CuKα, tube voltage: 40 kV, tube current: 40 mA, scan speed: 10.0°/min, and 2θ scan range: 10° to 70°. As an example, the X-ray diffraction pattern of the oxide composite particles of Example 1 is shown in Fig. 2. The quantitative analysis of crystal phases was performed using Rietveld method software (manufactured by MDI, trade name: integrated powder XRD software Jade+9.6). The proportion (% by mass) of each crystal phase was determined by X-ray diffraction measurement of an oxide composite particle sample and calculation by Rietveld analysis. At this time, by using the following formula (2), the content (Rc) (% by mass) of α-cristobalite as a silica component in the oxide composite particle sample was calculated from the ratio between the peak area (As) of an α-cristobalite crystal phase-derived peak among X-ray diffraction peaks obtained by X-ray diffraction measurement of the oxide composite particle sample and the peak area (Ac) of an X-ray diffraction peak obtained by measuring a cristobalite reference sample (JAWE 551) manufactured by Japan Association for Working Environment Measurement.

$$Rc = 100As / Ac \ (2)$$

The thus determined α-cristobalite content and the proportion of the crystal phase separately obtained by Rietveld analysis were compared to calculate the contents of each crystal phase and an amorphous silica component in the oxide composite particle sample in the following manner.

The content (% by mass) of each crystal phase determined by Rietveld analysis is defined as follows: the content of an α-cristobalite crystal phase is defined as C, the content of an α-alumina crystal phase is defined as A, the content of a mullite crystal phase is defined as M, and the content of another crystal phase is defined as X. At this time, Rc, A × Rc/C, M × Rc/C, and X × Rc/C obtained by multiplying Rc/C, which is the ratio of C and Rc, by C, A, M, and X were respectively defined as the contents (% by mass) of an α-cristobalite crystal phase, an α-alumina crystal phase, a mullite crystal crystal phase, and another crystal phase, and the rest was defined as an amorphous component.

[Measurement of elemental ratio of aluminum/silicon determined by XPS]

The elemental ratio of aluminum/silicon at the surface of the oxide composite particles was measured using an X-ray photoelectron spectrometer (XPS, manufactured by Thermo Fisher Scientific, trade name: K-Alpha). The oxide composite particles were introduced into the device and then measured by irradiating a measurement area of 400 × 200 μm with monochromatic Al-Kα rays. A peak corresponding to an aluminum-oxygen bond (near a binding energy of 75 eV) and a peak corresponding to a silicon-oxygen bond (near a binding energy of 103 eV) were extracted from the spectra obtained by the measurement, and the respective peak area ratios corrected using a relative sensitivity factor provided by ULVAC-PHI, Inc. were used as the elemental ratios of aluminum/silicon. It should be noted that the elemental ratio herein can be considered as a number ratio of the number of atoms of elements present in the measurement range (surface of the oxide composite particle).

[Method of measuring content of aluminum contained in oxide composite particle in terms of a single oxide of aluminum $(Al_2O_3)$]

First, 0.1 g of oxide composite particles were placed in a Teflon (R) container, 2 mL of 6M sulfuric acid was added, and the Teflon (R) container was tightly closed and then heated in a drier adjusted to 230°C for 16 hours. After allowing to cool, the decomposed solution was diluted to 10 mL with pure water to serve as a test solution, which was diluted with dilute sulfuric acid, if necessary. Thereafter, the measurement sample was analyzed by ICP optical emission spectrometry (ICP spectroscopic analyzer: manufactured by Agilent Technologies, Inc., trade name: 5110 VDV), and the amount of aluminum in the oxide composite particles was measured to calculate the content of aluminum in terms of a single oxide of aluminum $(Al_2O_3)$. The measurement wavelength was set at 396.152 nm. It should be noted that calibration curves were prepared with the following standard solutions.

6.0 g of titanium (99.9% or more pure) was warmed and dissolved in 50 mL of 6 M hydrochloric acid, and then the resulting solution was diluted to 100 mL to prepare a titanium solution. An aluminum standard solution (A11000, manufactured by Fujifilm Wako Pure Chemical Industries, Ltd) were divided into 10-mL spitz tubes at 0 mg/L, 0.1 mg/L, 1.0 mg/L, and 10 mg/L, and 2 mL of 6 M sulfuric acid and 1 mL of the titanium solution were added thereto to prepare a volume of a standard solution for calibration curves.

[Measurement of average particle diameter]

The average particle diameter was measured using a laser diffraction particle size distribution analyzer (manufactured by Beckman Coulter, Inc., trade name: LS 13 320). 50 cm$^3$ of pure water and 0.1 g of a measurement sample were placed in a disposable plastic cup and subjected to dispersion treatment for 1 minute in an ultrasonic homogenizer (manufactured by Microtec Co., Ltd., trade name: Smurt NR-50M). The dispersion liquid of the measurement sample obtained by dispersion treatment was added drop by drop with a dropper to the laser diffraction particle size distribution analyzer, and measurement was performed 30 seconds after a predetermined amount of the dispersion liquid was added. From the data of light intensity distribution of diffracted/scattered light by the measurement sample detected by a sensor in the laser diffraction particle size distribution analyzer, particle size distribution was calculated. The average particle diameter was determined by multiplying the value of a measured particle diameter by a relative particle volume (percentage difference) and dividing by the total relative particle volume (100%). It should be noted that % herein means % by volume.

[Measurement of average circularity]

The oxide composite particles were fixed to a sample stage by a carbon tape and then subjected to osmium coating, and an image thereof with a magnification of 500 to 5000× and a resolution of 2048 × 1356 pixels taken by a scanning electron microscope (manufactured by JEOL Ltd., trade name: JSM-7001F SHL) was loaded into a personal computer. From the image, the projected area (S) and projected perimeter (L) of a single oxide composite particle were calculated using an image analyzer (manufactured by Nippon Roper, K.K., trade name: Image-Pro Premier Ver. 9.3), and the circularity of the oxide composite particle was calculated by the following formula (1). The circularities of randomly-selected 100 oxide composite particles having a projected area diameter of 0.1 μm or more were determined in such a manner as described above, and the average thereof was determined as an average circularity.

$$\text{Circularity} = 4\pi S / L^2 \, (1)$$

[Measurement of dielectric constant and dielectric loss tangent of resin composition]

The oxide composite particles and a polyethylene powder (manufactured by Sumitomo Seika Chemicals Company, Limited., trade name: FLO-THENE UF-20S) were weighed so that the content of the oxide composite particles was 40% by volume, and were mixed by a vibration mixer manufactured by Resodyn (acceleration 60 g, treatment time 2 minutes). A predetermined volume of the obtained mixed powder was weighed (so that the thickness was about 0.5 mm), placed in a metallic frame having a diameter of 3 cm, and formed into a sheet by a nanoimprint device (manufactured by SCIVAX, trade name: X-300) under the conditions of 140°C, 5 minutes, and 30000 N to obtain an evaluation sample. The sheet as the evaluation sample has a thickness of about 0.5 mm. The shape or size of the evaluation sample does not influence the evaluation results as long as the evaluation sample can be loaded in a measurement device, but is about 1 to 3 cm square.

The dielectric characteristics were measured by the following method. A 36 GHz cavity resonator (manufactured by SUMTEC, Inc.) was connected to a vector network analyzer (trade name: 85107, manufactured by Keysight Technologies), and the evaluation sample (1.5 cm square, thickness 0.5 mm) was set to cover a hole provided in the resonator and having a diameter of 10 mm to measure a resonance frequency (f0) and an unloaded Q value (Qu). The evaluation sample was rotated after every measurement to repeat the measurement 5 times in the same manner. The average of the obtained values of f0 and the average of the obtained values of Qu were determined as measured values. The dielectric constant and the dielectric loss tangent (tanδc) were respectively calculated from f0 and Qu using analysis software (software manufactured by SUMTEC, Inc.). The measurement temperature was 20°C and the humidity was 60%RH.

[Table 1]

| | | Example 1 | Example 2 | Example 3 | Example 4 | Example 5 | Example 6 | Example 7 |
|---|---|---|---|---|---|---|---|---|
| Average particle diameter of silica particles (um) | | 4.8 | 4.8 | 4.8 | 4.8 | 0.5 | 3.1 | 8.2 |
| Amount of alumina particles added (% by mass) | | 15 | 50 | 15 | 15 | 15 | 15 | 15 |
| Heating temperature (°C) | | 1500 | 1500 | 1400 | 1700 | 1400 | 1400 | 1500 |
| Heating time (h) | | 4 | 4 | 2 | 2 | 4 | 4 | 4 |
| Oxide composite particles | $\alpha$-Cristobalite crystal phase content (% by mass) | 79 | 38 | 65 | 77 | 78 | 67 | 77 |
| | $\alpha$-Alumina crystal phase content (% by mass) | 1 | 27 | 2 | 1 | 2 | 1 | 1 |
| | Mullite crystal phase content (% by mass) | 18 | 33 | 11 | 22 | 18 | 13 | 16 |
| | XPS aluminum/silicon elemental ratio (-) | 0.4 | 7.2 | 1.7 | 0.9 | 1.2 | 1.5 | 0.8 |
| | Aluminum content in terms of a single oxide of aluminum (% by mass) | 1 5 | 50 | 15 | 15 | 15 | 15 | 15 |
| | Average particle diameter (um) | 11.8 | 41.2 | 5.5 | 10.3 | 0.8 | 4.1 | 32.1 |
| | Average circularity (-) | 0.88 | 0.91 | 0.84 | 0.85 | 0.91 | 0.92 | 0.92 |
| Resin composition | Dielectric constant (-) | 3.9 | 4.9 | 4.2 | 4.0 | 4.1 | 3.9 | 4.0 |
| | Dielectric loss tangent ($10^{-4}$) | 1.7 | 4.8 | 4.1 | 0.9 | 4.9 | 4.5 | 1.8 |

[Table 2]

| | | Comparative Example 1 | Comparative Example 2 | Comparative Example 3 |
|---|---|---|---|---|
| Average particle diameter of silica particles (um) | | 4.8 | 4.8 | 4.8 |
| Amount of alumina particles added (% by mass) | | 5 | 70 | 15 |
| Heating temperature (°C) | | 1500 | 1500 | 1200 |
| Heating time (h) | | 4 | 4 | 2 |
| Oxide composite particles | $\alpha$-Cristobalite crystal phase content (% by mass) | 81 | 14 | 5 |
| | $\alpha$-Alumina crystal phase content (% by mass) | 1 | 51 | 0 |
| | Mullite crystal phase content (% by mass) | 8 | 34 | 4 |
| | XPS aluminum/silicon elemental ratio (-) | 0.04 | 9.1 | 2.5 |
| | Aluminum content in terms of a single oxide of aluminum (% by mass) | 5 | 70 | 15 |
| | Average particle diameter (um) | 14.7 | 48.3 | 5.8 |
| | Average circularity (-) | 0.78 | 0.81 | 0.84 |
| Resin composition | Dielectric constant (-) | 4.2 | 6.3 | 4.5 |
| | Dielectric loss tangent ($10^{-4}$) | 2.1 | 12.3 | 14.2 |

As can be seen from Table 1 and Table 2, the oxide composite particles of Examples 1 to 7 according to the embodiment of the present invention had high average circularity (0.85 or more), and the resin compositions respectively containing the oxide composite particles had low dielectric constant (6.0 or less) and low dielectric loss tangent ($5.0 \times 10^{-4}$ or less).

REFERENCE SIGNS LIST

1    Tumbling fluidized bed machine
2    Blade rotor
3    Gas
4    Spray nozzle
5    Alumina slurry (alumina sol)
6    Swirling flow

**Claims**

1.   Oxide composite particles comprising silica and an oxide of aluminum (a single oxide or a composite oxide, or both), wherein

the oxide composite particles contain 10 to 90% by mass of an $\alpha$-cristobalite crystal phase, 50% by mass or less of an $\alpha$-alumina crystal phase, and more than 10% by mass of a mullite crystal phase, and
an elemental ratio of aluminum to silicon (aluminum/silicon) as determined by X-ray photoelectron spectroscopy is 0.1 or more.

2. The oxide composite particles according to claim 1, wherein a content of the aluminum contained in the oxide composite particles is 5 to 60% by mass in terms of a single oxide of aluminum ($Al_2O_3$).

3. The oxide composite particles according to claim 1 or 2, wherein an average particle diameter of the oxide composite particles is 0.5 to 70 $\mu$m.

4. The oxide composite particles according to claim 1 or 2, wherein an average circularity of the oxide composite particles is 0.85 or more.

5. The oxide composite particles according to claim 1 or 2, wherein the oxide composite particles contain 0.1 to 50% by mass of the $\alpha$-alumina crystal phase.

6. A method for producing the oxide composite particles according to claim 1 or 2, the method comprising the steps of

   mixing silica particles having an average particle diameter of 0.5 to 10 $\mu$m and alumina particles to obtain a mixture; and
   heating the mixture at 1300 to 1700°C for 2 to 8 hours.

7. The method for producing the oxide composite particles according to claim 6, wherein the step to obtain a mixture is a step of spraying an alumina slurry containing the alumina particles into an air stream in which the silica particles are floating using a tumbling fluidized bed machine to form particles having a core-shell structure such that the alumina particles adhere to a surface of the silica particles.

8. A resin composition comprising the oxide composite particles according to claim 1 or 2 and a resin.

9. The resin composition according to claim 8, wherein a content of the oxide composite particles in the resin composition is 20 to 80% by mass.

10. The resin composition according to claim 8, which is a resin composition for high-frequency substrates.

Fig. 1

Fig. 2

<table>
<tr><td colspan="2" align="center">**INTERNATIONAL SEARCH REPORT**</td><td colspan="2">International application No.<br>**PCT/JP2022/025298**</td></tr>
</table>

**A. CLASSIFICATION OF SUBJECT MATTER**

*C01B 33/18*(2006.01)i; *C08L 101/00*(2006.01)i; *C08K 3/22*(2006.01)i; *C08K 3/36*(2006.01)i; *C01F 7/02*(2022.01)i
FI: C01F7/02; C08K3/22; C08K3/36; C01B33/18 C; C08L101/00

According to International Patent Classification (IPC) or to both national classification and IPC

**B. FIELDS SEARCHED**

Minimum documentation searched (classification system followed by classification symbols)

C01B33/18; C08L101/00; C08K3/22; C08K3/36; C01F7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-251042 A (NIPPON ELECTRIC GLASS CO., LTD.) 22 September 1998 (1998-09-22) claims, paragraphs [0012], [0016], [0028]-[0031], table 1 | 1-6 |
| Y | claims, paragraphs [0012], [0016], [0028]-[0031], table 1 | 7 |
| A | claims, paragraphs [0012], [0016], [0028]-[0031], table 1 | 8-10 |
| Y | JP 2008-162849 A (SHIN ETSU CHEM. CO., LTD.) 17 July 2008 (2008-07-17) paragraph [0031] | 7 |
| A | JP 2019-19222 A (DENKA CO., LTD.) 07 February 2019 (2019-02-07) entire text | 1-10 |
| A | JP 2015-78105 A (NIPPON STEEL SUMIKIN MATERIALS CO., LTD.) 23 April 2015 (2015-04-23) entire text | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025298**

| Patent document cited in search report | | | Publication date (day/month/year) | Patent family member(s) | Publication date (day/month/year) |
|---|---|---|---|---|---|
| JP | 10-251042 | A | 22 September 1998 | (Family: none) | |
| JP | 2008-162849 | A | 17 July 2008 | (Family: none) | |
| JP | 2019-19222 | A | 07 February 2019 | (Family: none) | |
| JP | 2015-78105 | A | 23 April 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58138740 A
- JP 6207753 B
- WO 2018186308 A
- JP 10251042 A